# EUROPÄISCHE PATENTSCHRIFT

(11) **EP 2 093 985 B1**
(45) Veröffentlichungstag und Bekanntmachung des Hinweises auf die Patenterteilung: **22.06.2016**
(21) Anmeldenummer: 08009237.2
(22) Anmeldetag: 20.05.2008
(51) Int. Cl.: H04M 3/42

(54) **Verfahren zum Betreiben einer Telefonanlage mit mindestens zwei Telefonie-Endgeräte und Telefonie-Endgerät zur Durchführung des Verfahrens**
Method for operating a telephone system with at least two telephone terminals and telephone terminal for implementing the method
Procédé de fonctionnement d'une installation téléphonique dotée d'au moins deux terminaux de téléphonie et terminal de téléphonie destiné à la réalisation du procédé

(30) Priorität: 21.02.2008 EP 08003177
(43) Veröffentlichungstag der Anmeldung: 26.08.2009
(73) Patentinhaber: Avaya GmbH & Co. KG, 60326 Frankfurt am Main (DE)
(72) Erfinder: Farber, James, 07760 Rumson, NJ (US); Stadler, Stephan, 63150 Heusenstamm (DE); Grün, Michael, 22926 Ahrensburg (DE); Schlosseckl, Dirk, 25746 Heide (DE); Greenspan, Steven, 07076 Scotch Plains, NJ (US)
(74) Vertreter: Tergau & Walkenhorst Patentanwälte - Rechtsanwälte

(56) Entgegenhaltungen:
- EP-A- 1 215 869
- DE-A1- 19 752 403
- US-A- 4 788 720

## Beschreibung

Die Erfindung bezieht sich auf ein Verfahren zum Betreiben einer Telefonanlage mit mindestens zwei Telefonie-Endgeräten, zu denen und/oder von denen zusätzlich zu Sprach- oder Nutzdaten Funktionsdaten übertragen werden, anhand derer Sonderfunktionen der Telefonanlage ausgeführt werden. Sie betrifft weiter ein Telefonie-Endgerät mit einer Aktionstaste zur Ausführung von Sonderfunktionen zur Durchführung des Verfahrens.

In modernen Telefonanlagen oder -systemen sind üblicherweise eine Vielzahl von Telefonie-Endgeräten mit einer zentralen Vermittlungseinheit verbunden, über die Telekommunikationsverbindungen zwischen einzelnen Telefonie-Endgeräten oder auch von außerhalb des internen Telefonnetzwerks eingehenden Anrufen mit ausgewählten Telefonie-Endgeräten hergestellt werden. Im Rahmen dieser Telekommunikationsverbindungen werden Sprach- oder Nutzdaten zu dem jeweils ausgewählten Telefonie-Endgerät hin und/oder von diesem an die zentrale Vermittlungseinrichtung und von dieser an das jeweilige Endgerät übertragen. Die Datenübertragung kann dabei auf herkömmliche Weise oder auch unter Nutzung des Internet-Protokolls vorgenommen werden.

Üblicherweise werden in derartigen Telefonanlagen oder -systemen zusätzlich zu den Sprach- oder Nutzdaten zu den und/oder von den jeweiligen Telefonie-Endgeräten auch noch weitere Daten, nämlich so genannte Funktions- oder Steuerdaten, übertragen, die nicht unmittelbar Teil der innerhalb der Kommunikationsverbindung ausgetauschten Informationen sind, sondern die die Grundlage für die Ausführung von so genannten Sonderfunktionen der Telefonanlage bilden. Bei derartigen Sonderfunktionen kann es sich beispielsweise um Einrichtungs- oder Steuerdaten für die Aktivierung oder Deaktivierung von Rufumleitungen, von Anrufbeantworterfunktionen, von Gebührungserfassungs- oder Verwaltungsinformationen oder dergleichen behandeln. Hilfsweise kann im Rahmen derartiger Sonderfunktionen auch die Ruf- oder Nebenstellennummer eines anrufenden Teilnehmers an das jeweils angerufene Telefonie-Endgerät übertragen und dort zur Anzeige gebracht werden, so dass der Nutzer des angerufenen Telefonie-Endgeräts bereits beim Eingehen des Anrufs Informationen über den Anrufer erhalten kann. Im Falle der Abwesenheit des angerufenen Teilnehmers können im Rahmen weiterer Sonderfunktionen Rufnummern der anrufenden Teilnehmer auch in einer Rufnummern- oder anderen Anruferliste des angerufenen Telefonie-Endgeräts gespeichert oder hinterlegt werden, so dass der angerufene Teilnehmer nach seiner Rückkehr an den Arbeitsplatz eine Information über die zwischenzeitlich eingegangenen, von ihm nicht angenommenen Anrufe erhält.

Die Telefonie-Endgeräte der genannten Telefonanlagen sind üblicherweise über die eigentlichen Rufnummerntasten hinaus mit weiteren Tasten, insbesondere so genannten Aktionstasten, versehen, über die spezifisch voreingestellte Sonderfunktionen ausgeführt werden können. Beispielsweise können dabei derartige Aktionstasten mit fest hinterlegten oder vom Benutzer hinterlegbaren Rufnummern belegt sein, wobei durch die Bedienung einer derartigen Aktionstaste in der Art einer Kurzwahltaste oder eines so genannten "speed dialing" ein Anruf bei der entsprechend hinterlegten Rufnummer ausgelöst wird. Weitere Aktionstasten können beispielsweise dafür vorgesehen sein, einen Anruf vorübergehend entgegen zu nehmen und stumm zu schalten, um beispielsweise eine Weitervermittlung eines Anrufs vorzunehmen ("hold"-Funktion), um eine Anrufbeantworterfunktion zu aktivieren oder zu deaktivieren oder dergleichen.

In Telefonanlagen mit derartig ausgerüsteten Telefonie-Endgeräten kann die zunehmende Berücksichtigung weiterer Sonderfunktionen und die Zuordnung entsprechender Aktionstasten zu den genannten Sonderfunktionen jedoch zu vergleichsweise komplexen und unübersichtlichen Tastenfeldern mit einer Vielzahl von Aktionstasten führen, wobei bereits die große Anzahl derartiger Aktionstasten die Übersichtlichkeit und gleichermaßen die Bedienbarkeit des jeweiligen Telefonie-Endgeräts weiter einschränkt.

Telekommunikationssysteme mit derartigen Aktionstasten sind aus den Druckschriften DE 197 52 403 A1, EP 1 215 869 A2 und US 4,788,720 bekannt.

Der Erfindung liegt daher die Aufgabe zugrunde, ein Verfahren zum Betreiben einer Telefonanlage der oben genannten Art anzugeben, mit dem auf besonders einfache und für den Benutzer besonders zielführende Weise auch eine vergleichsweise große Vielzahl von Sonderfunktionen bearbeitet werden kann. Des weiteren soll ein zur Durchführung des Verfahrens besonders geeignetes Telefonie-Endgerät angegeben werden.

Bezüglich des Verfahrens wird diese Aufgabe erfindungsgemäß gelöst, in dem einer zum Auslösen von Sonderfunktionen vorgesehenen Aktionstaste eines ersten Telefonie-Endgerätes die jeweils auszulösende Sonderfunktion abhängig von seinem Status und/oder vom Status eines zweiten ihm zugewiesenen Telefonie-Endgerätes zugewiesen wird.

Die Erfindung geht dabei von der Überlegung aus, dass selbst bei der Verwaltung einer vergleichsweise großen Zahl von Sonderfunktionen und bei einer auf die Bedürfnisse des Benutzers in besonders weitgehenden Maße zugeschnittenen Zuordnung dieser Sonderfunktionen die Anzahl der zur Bedienung der Sonderfunktionen benötigten Aktionstasten und somit auch die Komplexität der entsprechend ausgelegten Telefonie-Endgeräte besonders gering gehalten werden kann, indem an Stelle einer festen eine flexible und bedarfsweise modifizierbare Zuordnung von Sonderfunktionen zu einzelnen Aktionstasten vorgenommen wird. Um dabei dem Benutzer eine besonders bedarfsgerechte und effiziente Bedienbarkeit des jeweiligen Telefonie-Endgeräts bereitzustellen, sollte eine derartige flexible Zuordnung von Sonderfunktionen zu den Aktionstasten situationsabhängig und gegebenenfalls auch unter Rückgriff auf aus Erfahrungswissen gewonnene Nutzungsprofile erfolgen. Eine situationsabhängige Belegung der Aktionstasten mit Sonderfunktionen ist dabei auf besonders günstige Weise umsetzbar, in dem die Zuordnung der Sonderfunktionen zu den Aktionstasten abhängig vom Status der Telefonanlage und/oder vom Status einzelner Telefonie-Endgeräte, insbesondere des jeweils betroffenen Telefonie-Endgeräts oder eines diesem auf spezifische Weise zugeordneten zweiten Telefonie-Endgeräts, erfolgt.

In modernen Telefonanlagen, die hinsichtlich ihrer Konzeption und Struktur oftmals an die jeweiligen Unternehmens- oder Organisationsstrukturen angepasst sein können, können mehrere Telefonie-Endgeräte unter Anderem auch entsprechend einer organisatorischen Zusammenfassung ihrer Nutzer gruppenweise zusammengefasst sein. Entsprechend der organisatorischen Aufgliederung der jeweiligen Unternehmens- oder Organisationsstruktur kann dabei beispielsweise eine spezifische Gruppe von Nutzern, die auch fachlich eng zusammen arbeiten und beispielsweise ein Team oder eine funktionale Einheit innerhalb des Unternehmens oder der Organisation bilden, über einander innerhalb der jeweiligen Gruppe zugeordnete Telefonie-Endgeräte verfügen. Zweckmäßigerweise ist dabei die nunmehr vorgesehene Zuordnung eines zweiten zu einem ersten Telefonie-Endgerät anhand einer derartigen funktionalen Gliederung oder Zuordnung der jeweiligen Nutzer vorgenommen, so dass über die entsprechende Zuordnung oder Zusammenschaltung der Telefonie-Endgeräte auch so genannte Team-Funktionen wahrgenommen werden können. Innerhalb eines derartigen Teams oder einer derartigen Gruppe kann somit durch eine geeignete variable und flexible Zuordnung von Sonderfunktionen zu einzelnen Aktionstasten eine Anzahl von Gruppenfunktionen wahrgenommen werden, wobei beispielsweise eine wechselweise Überwachung des Bedienungszustands einzelner Telefonie-Endgeräte der jeweiligen Gruppe vorgenommen werden kann. Hierüber ist es beispielsweise möglich, einzelnen Gruppen- oder Teammitgliedern zu signalisieren, ob ein auf die Gruppe oder das Team bezogener Anruf bereits von einem anderen Gruppen- oder Teammitglied beantwortet wurde, oder ob ein eingehender Anrufswunsch nunmehr angenommen werden soll.

Bei der statusabhängigen Zuordnung von Sonderfunktionen zu Aktionstasten ist als Status für das jeweilige Telefonie-Endgerät vorteilhafterweise insbesondere berücksichtigt, ob das jeweilige Telefonie-Endgerät gerade frei und somit verfügbar oder aber gerade mit einer aktiven Anrufverbindung belegt ist. Für eine statusabhängige flexible Belegung von Aktionstasten mit Sonderfunktionen, bei denen ein erstes Telefonie-Endgerät in Abhängigkeit vom Status eines zweiten Telefonie-Endgeräts aktualisiert und modifiziert wird, ist dabei vorteilhafterweise eine permanente Überwachungsfunktion eingerichtet, mit der das erste Telefonie-Endgerät permanent den Status des zugewiesenen zweiten Telefonie-Endgeräts erfasst, wobei entsprechend des dabei ermittelten Status die entsprechende Zuordnung der Sonderfunktionen zu den Aktionstasten vorgenommen wird. Selbstverständlich kann dabei auch eine wechselweise Überwachung der beiden Telefonie-Endgeräte vorgesehen sein, wobei beide Telefonie-Endgeräte abhängig vom Status des jeweils anderen Telefonie-Endgeräts hinsichtlich der den Aktionstasten zugewiesenen Sonderfunktionen statusabhängig modifiziert werden. Darüber hinaus kann selbstverständlich auch eine derartige einseitige oder wechselweise Statusüberwachung einzelner Telefonie-Endgeräte in einem größeren Verbünd von drei oder mehr Telefonie-Endgeräten vorgesehen sein.

In vorteilhafter Ausgestaltung wird die Aktionstaste im einfachsten Fall, in dem auf beiden betroffenen Telefonie-Endgeräten gerade keine Anruferverbindung aufrechterhalten wird, also in dem sowohl das erste als auch das zweite Telefonie-Endgerät gerade frei sind, als Kurzwahl- oder so genannte "speed dialing"-Taste zur Herstellung einer Anruferverbindung in den beiden Telefonie-Endgeräten genutzt. In diesem Fall ist der Aktionstaste somit die entsprechende Sonderfunktion "Kurzwahltaste zum zugewiesenen zweiten Telefonie-Endgerät" zugeordnet.

In weiterer vorteilhafter Ausgestaltung wird der Aktionstaste auf dem ersten Telefonie-Endgerät, das unter Anderem mit einer entsprechenden Überwachung des zweiten Telefonie-Endgeräts betraut ist, im Falle eines für das zweite Telefonie-Endgerät eingehenden Anruf-Verbindungswunsches die Sonderfunktion "Anrufübernahme" zugewiesen. Dabei wird somit über die Aktionstaste auf dem ersten Telefonie-Endgerät eine Anrufannahme eines auf dem zweiten Telefonie-Endgerät eingehenden Anrufs ermöglicht. In weiterer vorteilhafter Ausgestaltung kann dabei für den Fall, dass auf dem zweiten Telefonie-Endgerät gleichzeitig mehrere Anruf-Verbindungswünsche eingehen, durch die Aktionstaste und eine zugeordnete Auswahleinheit eine Annahme eines der eintreffenden Anrufe durch das erste Telefonie-Endgerät ausgelöst werden. Der Nutzer des ersten Telefonie-Endgeräts kann dabei durch geeignete Anzeigemittel am ersten Telefonie-Endgerät, also beispielsweise blinkende LEDs oder dergleichen, darauf aufmerksam gemacht werden, dass gerade ein oder mehrere Anrufe am zweiten Telefonie-Endgerät eingehen. In diesem Modus ist das erste Telefonie-Endgerät somit für eine Überwachung des zweiten Telefonie-Endgeräts ausgelegt.

In alternativer oder zusätzlich vorteilhafter Ausgestaltung kann durch Aktivierung der Aktionstaste das erste Telefonie-Endgerät einem Telefongespräch zwischen einem dritten, außerhalb oder innerhalb des Telefonnetzwerkes befindlichen Telefonie-Endgerät und dem der Aktionstaste zugewiesenen zweiten Telefonie-Endgerät zugeschaltet werden. Dadurch werden Konferenzgespräche zwischen dem ersten und dem zweiten Telefonie-Endgerät mit einem dritten Telefonie-Endgerät ermöglicht.

In weiterer alternativer oder zusätzlicher vorteilhafter Ausgestaltung können die Telefonie-Endgeräte dafür ausgelegt sein, dass in der Art einer automatischen oder manuell eingeleiteten Anrufweiterleitung ein auf dem ersten Telefonie-Endgerät eingehender Anruf auf das zweite Telefonie-Endgerät weitergeleitet wird. In diesem Fall, insbesondere so lange eine derart weitergeleitete Anrufverbindung noch aktiv ist, kann der Aktionstaste des ersten Telefonie-Endgeräts vorübergehend die Sonderfunktion zugewiesen werden, dass der vom ersten an das zweite Telefonie-Endgerät weitergeleitete Anruf durch Aktivierung der jeweiligen Aktionstaste auf das erste, ursprünglich angewählte Telefonie-Endgerät zurückgeholt wird.

Zur weiteren Reduzierung der mit Sonderfunktion belegten Tastenfeldern an Telefonie-Endgeräten kann in besonders vorteilhafter Ausgestaltung das zugewiesene zweite Telefonie-Endgerät durch Selektion aus einer Liste - die beispielsweise am Display des Telefonie-Endgerätes dargestellt wird - bestimmt werden. Hierdurch ist eine besonders variable Nutzung der Aktionstaste möglich. Die Zuweisung kann nämlich hierdurch den Ansprüchen der Benutzer stetig angepasst und verändert werden. In besonders vorteilhafter Ausführung wird die Bestätigung des aus der Liste ausgewählten Telefonie-Endgerätes durch Betätigung der Aktionstaste vorgenommen. Hierdurch wird erreicht, dass keine zusätzlichen Bedientasten am Telefonie-Endgerät benötigt werden und damit eine möglichst übersichtliche und logische Bedienbarkeit des Telefonie-Endgerätes erzielt wird.

In weiterer vorteilhafter Ausgestaltung wird die Liste durch Betätigung der Aktionstaste - beispielsweise in dem Falle, in dem der Aktionstaste noch kein zweites Telefonie-Endgerät zugewiesen wurde - erzeugt und auf einem Display des Telefonie-Endgerätes dargestellt. Diese Liste beinhaltet je nach Einstellung alle möglichen oder nur eine begrenzte Anzahl von bevorzugten Telefonie-Endgerätenran die eine Zuweisung vom ersten Telefonie Endgerät möglich ist. Dem Benutzter ist es dadurch möglich, mittels einer zugeordneten Auswahleinheit das gewünschte zweite Telefonie-Endgerät selbständig auszuwählen und bei Bedarf zu ändern, ohne weitere Funktionstasten zu benötigen.

Bezüglich des Telefönie-Endgeräts wird die genannte Aufgabe gelöst mit einer Aktionstaste zur Ausführung von Sonderfunktionen, wobei die Aktionstaste zur situations- oder statusabhängig veränderbaren Belegung mit Sonderfunktionen der genannten Art ausgelegt ist. Um dabei eine ein- oder wechselseitige Statusüberwachung eines oder mehrerer weiter Telefonie-Endgeräte zu ermöglichen, ist das Telefonie-Endgerät dabei vorzugsweise mit einem integrierten Speicher ausgeführt, wobei einzelne Speicherzonen oder -bereiche gezielt für die Hinterlegung von Zuordnungsinformationen zu weiteren Telefonie-Endgeräten oder auch zur Hinterlegung von diesbezüglichen Stabsinformationen vorgesehen und reserviert sind.

Die mit der Erfindung erzielten Vorteile bestehen insbesondere darin, dass durch die flexible und situations- oder statusabhängige Belegung von Aktionstasten mit Sonderfunktionen mit einer vergleichsweise gering gehaltenen und somit für den Benutzer übersichtlichen Anzahl von Aktionstasten ein vergleichsweise großer Bereich an Sonderfunktionen behandelt werden kann. Insbesondere bei der gruppenweisen Zusammenschaltung von Telefonie-Endgeräten, entsprechend einer analogen gruppen- oder funktionsbezogenen Zusammenfassung der Nutzer zu Teams oder dergleichen, können dabei teambezogene Sonderfunktionen, insbesondere im Hinblick auf die gruppenweise gemeinsame Bearbeitung, Weitergabe oder Überwachung von eingehenden Anruferwünschen, ermöglicht werden. Auf diese Weise ist mit besonders einfachen Mitteln insbesondere die schnelle und einfache Herstellung von internen Anruf-Querverbindungen. wechselweiser Überwachung des Telefonstatus, wechselweiser Anrufübernahme und dergleichen ermöglicht.

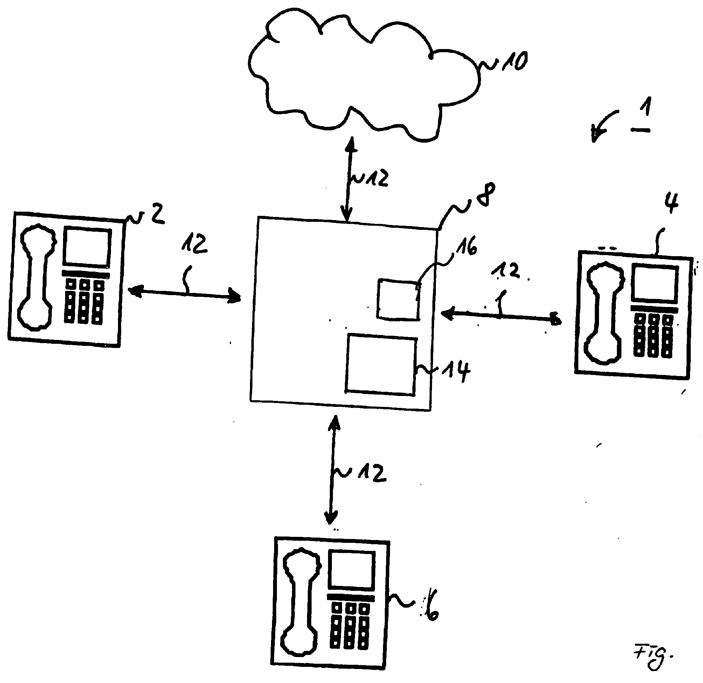

Ein Ausführungsbeispiel der Erfindung wird anhand einer Zeichnung näher erläutert. Darin zeigt die Figur schematisch eine Telefonanlage.

Die Telefonanlage 1 gemäß der Figur umfasst eine Anzahl von Telefonie-Endgeräten 2, 4, 6, die datenseitig mit einer gemeinsamen, auch als PBX bezeichneten zentralen Vermittlungseinheit 8 verbunden sind. Die zentrale Vermittlungseinheit 8 ist ihrerseits mit einem externen Telefonnetz 10 verbunden. Im Ausführungsbeispiel ist dabei als Übertragungsmedium das Internet-Protokoll vorgesehen, wobei die zentrale Vermittlungseinheit 8 über das Internet geeignet mit dem Telefonnetz 10 verbunden ist. Wie durch die Doppelpfeile 12 angedeutet, ist die zentrale Vermittlungseinheit 8 sowohl mit dem externen Telefonnetz 10 als auch mit den internen Telefonie-Endgeräten 2, 4, 6 über geeignete Daten- oder Kommunikationskanäle verbunden.

Beim Betrieb der Telefonanlage 1 werden dabei mit den Telefonie-Endgeräten 2, 4, 6 einerseits Sprach- oder Nutzdaten ausgetauscht, die im Hinblick auf den im Ausführungsbeispiel vorgesehenen Rückgriff auf die Nutzung des Internet-Protokolls in geeigneter komprimierter und digitalisierter Form ausgetauscht werden. Zusätzlich zu den Sprach- oder Nutzdaten werden über die genannten Kommunikationskanäle auch Funktionsdaten übertragen, anhand derer Sonderfunktionen der Telefonanlage 1 ausgeführt werden. Als Sonderfunktionen sind dabei im Ausführungsbeispiel in durchaus üblicher Ausgestaltung insbesondere von den einzelnen Nutzern aktivierbare Funktionen, wie beispielsweise Umleitungen, Anrufbeantworterfunktionen, Gebührenverwaltung oder dergleichen vorgesehen.

Die Telefonie-Endgeräte 2, 4, 6 der Telefonanlage 1 sind darüber hinaus spezifisch dafür ausgelegt, den Nutzern auf besonders einfache Weise in der Art- einer Teamstruktur die gemeinsame Abwicklung und Verwaltung eingehender Anrufwünsche zu ermöglichen. Dazu sind die Telefonie-Endgeräte 2, 4, 6 für eine wechselweise Überwachung untereinander ausgelegt, wobei über entsprechende Nutzdaten jedem der Telefonie-Endgeräte 2, 4, 6 jeweils ein Statussignal über die jeweils anderen Telefonie-Endgeräte 2, 4, 6 übermittelt wird, ob das jeweils betroffene Telefonie-Endgerät 2, 4, 6 gerade frei oder mit einer Anruferverbindung belegt ist.

Zur bedarfsweisen Aktivierung von Sonderfunktionen sind die Telefonie-Endgeräte 2, 4, 6 über die eigentlichen Rufnummerntasten hinaus mit weiteren Tasten, insbesondere so genannten Aktionstasten, versehen. Die jeweilige Aktionstaste ist dabei zur Ausführung einer aktuell zugeordneten Sonderfunktion vorgesehen. Einige der Aktionstasten können dabei mit fest installierten oder auch mit von einer Zentraleinheit manuell veränderbaren, auf den Nutzerwunsch abgestimmten Sonderfunktionen belegt sein. Darüber hinaus sind die Telefonie-Endgeräte 2, 4, 6 aber auch jeweils mit mindestens einer als so genannter "Team-Button" ausgestalteten Aktionstaste versehen, der wechselweise und jeweils abhängig vom Status eines oder mehrerer der jeweils anderen Telefonie-Endgeräte 2, 4, 6 eine entsprechende Sonderfunktion zugeordnet wird. Jedes der Telefonie-Endgeräte 2, 4, 6 ist darüber hinaus mit einem integrierten Speicher versehen, in dem in einem spezifisch bereitgehaltenen Speicherbereich das oder diejenigen der TelefonieEndgeräte 2, 4, 6 indiziert ist, das gerade überwacht werden soll.

Als für die jeweilige Aktionstaste oder den "Team-Button" zugeordnete Sonderfunktionen ist dabei im Ausführungsbeispiel Folgendes vorgesehen:
Falls sowohl das überwachende als auch das überwachte Telefonie-Endgerät 2, 4, 6 gerade frei sind oder zumindest gerade kein eingehender Anruf registriert wird, ist der jeweiligen Aktionstaste die Funktion einer Kurzwahl ("speed dialing") zum zweiten Telefonie-Endgerät 2, 4, 6 zugewiesen. Falls hingegen beim überwachenden Telefonie-Endgerät 2, 4, 6 ein bei einem zweiten, überwachten Telefonie-Endgerät 2, 4, 6 eingehender Anrufverbindungswunsch ("eingehender Anruf") registriert wird, wird der jeweiligen Aktionstaste die Sonderfunktion "Anrufentgegennahme" zugewiesen, so dass die Anrufannahme auf dem ersten Telefonie-Endgerät 2, 4, 6 veranlasst wird. Falls hingegen ein auf dem ersten Telefonie-Endgerät 2, 4, 6 eingehender Verbindungswunsch ("eingehender Anruf") registriert wird, wird der jeweiligen Aktionstaste die Sonderfunktion "weiterleitung auf das zweite Telefonie-Endgerät" zugeordnet. In diesem Fall ist es dem Nutzer des ersten Telefonie-Endgeräts 2, 4, 6 somit ermöglicht, von einer Anrufannahme abzusehen und stattdessen über die Aktivierung der Aktionstaste eine Weiterleitung des Anrufs auf das zugeordnete zweite Telefonie-Endgerät 2, 4, 6 zu veranlassen.

Die Telefonie-Endgeräte 2, 4, 6 sind darüber hinaus auch mit geeigneten Anzeigemitteln versehen, die das Eingehen von Anrufen, gegebenenfalls auch auf den anderen Telefonie-Endgeräten 2, 4, 6, geeignet anzeigen, wie beispielsweise blinkende LEDs oder dergleichen. Hierdurch wird der Nutzer jedes Telefonie-Endgeräts 2, 4, 6 in geeigneter Weise auch über den Anruferstatus der jeweils anderen Telefonie-Endgeräte 2, 4, 6 informiert. Des weiteren sind die Telefonie-Endgeräte 2, 4, 6 mit geeigneten Anzeigeeinrichtungen, insbesondere einem Display, versehen, so dass zusätzlich auch noch weitere Status- oder Zusatzinformationen über einen beim jeweiligen Telefonie-Endgerät 2, 4, 6 oder auch beim von diesem jeweils überwachenden Telefonie-Endgerät eingehenden Anruf oder dergleichen, wie beispielsweise insbesondere die Rufnummer des Anrufers, angezeigt werden können. Im Ausführungsbeispiel ist dieses Anzeigemittel ebenfalls mit den Sonderfunktionen für die variabel belegbare Aktionstaste verknüpft.

Dabei ist beispielsweise für den Fall einer Anrufübernahme über die Nutzung der jeweiligen Aktionstaste vorgesehen, dass bei einem auf dem zweiten Telefonie-Endgerät 2, 4, 6 eingehenden Anruf dieser Status zunächst durch ein geeignetes Anzeigemittel am ersten, überwachenden Telefonie-Endgerät 2, 4, 6 kenntlich gemacht wird. Durch ein erstmaliges Drücken der variabel belegbaren Aktionstaste kann der Nutzer des ersten Telefonie-Endgeräts 2, 4, 6 dabei veranlassen, dass zunächst die geeigneten Zusatzinformationen wie insbesondere die Rufnummer des das zweite, überwachte Telefonie-Endgerät 2, 4, 6 anrufenden Gerätes, auf der entsprechenden Anzeigeeinheit im ersten Telefonie-Endgerät 2, 4, 6 angezeigt werden. Anschließend kann der Nutzer des ersten Telefonie-Endgeräts 2, 4, 6 durch erneutes Drücken der Aktionstaste, der zwischenzeitlich somit eine weitere Sonderfunktion zugewiesen wurde, den Transfer des auf dem zweiten Telefonie-Endgeräts 2, 4, 6 eingehenden Anrufs auf das erste Telefonie-Endgerät 2, 4, 6 veranlassen.

Weiterhin ist vorgesehen, dass durch Drücken der Aktionstaste in dem Fall, in dem kein zweites Telefonie-Endgerät (2, 4, 6) dem ersten Telefonie-Endgerät (2, 4, 6) zugewiesen ist, eine Liste derjenigen Telefonie-Endgeräte (2, 4, 6) oder Gruppen generiert wird, zu denen eine Zuweisung möglich ist. Dabei kann zunächst aus dem zugeordneten integrierten Speicher ein Profil des Benutzes geladen werden, der bevorzugte Telefonie-Endgeräte (2, 4, 6) oder Gruppen beinhaltet, die an vorderen Positionen der auf dem Display dargestellten Liste positioniert werden. Innerhalb dieser Liste kann der Benutzer dann mittels einer zugeordneten Auswahleinheit navigieren und über erneutes Drücken der Aktionstaste die Zuweisung bestätigen.

Die Ausführungen von Funktionen über den Team-Button kann daher unmittelbar in Abhängigkeit des aktuellen Status des ihm zugewiesenen zweiten Telefonie-Endgerätes (2, 4, 6) geschehen oder mittelbar durch vorherige Auswahl aus den zur Verfügung stehenden Telefonie-Endgeräten (2, 4, 6) über eine Liste.

Im Falle der Zuweisung des Team-Buttons an eine Benutzergruppe wird dem Benutzer im Ausführungsbeispiel mittels einer LED der Status der Benutzergruppe signalisiert. Eine schnell blinkende LED bedeutet in diesem Falle, dass mindestens ein Telefonie-Endgerät (2, 4, 6) der Benutzergruppe über einen nicht beantworteten Verbindungswunsch verfügt. Ein langsames Blinken der LED bedeutet, dass zwar kein Telefonie-Endgerät (2, 4, 6) der Benutzergruppe eine unbeantwortete Anrufanfrage hat, aber mindestens ein Telefonie-Endgerät (2, 4, 6) der Benutzergruppe eine Verbindung geparkt ("on-hold"-Funktion) hat. Eine Aktivierung des Team Buttons stellt im ersten Fall eine Verbindung zu dem Teilnehmer des unbeantworteten Verbindungswunsches her und im zweiten Fall zu dem Teilnehmer des geparkten Anrufes. Sollten keine unbeantworteten Verbindungswünsche oder geparkten Anrufe existieren, so bedeutet ein Dauerleuchten der LED, dass mindestens ein Telefonie-Endgerät (2, 4, 6) der Benutzergruppe über eine aktive Anrufverbindung verfügt. Sollten alle Telefonie-Endgeräte (2, 4, 6) der Benutzergruppe frei sein, so leuchtet die dem Team-Button zugeordnete LED nicht.

Hierdurch wird erreicht, dass die statusabhängige Zuordnung der Funktionen des Team-Buttons auch bei einer Zuweisung an eine Benutzergruppe ähnlich funktioniert. Für den Benutzer spielt es dabei keine Rolle, ob nur ein einzelnes Telefonie-Endgerät (2, 4, 6) dem Team-Button zugewiesen wurde oder eine Mehrzahl in Form einer Benutzergruppe. Sollten sich mehrere Telefonie-Endgeräte (2, 4, 6) zeitgleich im gleichen Status befinden, so geschieht die Auswahl des gewünschten Telefonie-Endgerätes (2, 4, 6) bequem mittels der Auswahleinheit über das Display.

### Bezugszeichenliste

- 1: Telefonanlage
- 2, 4, 6: Telefonie-Endgerät
- 8: Vermittlungseinheit
- 10: Telefonnetz
- 12: Doppelpfeile

## Patentansprüche

1. Verfahren zum Betreiben einer Telefonanlage (1) mit einer Mehrzahl von Telefonie-Endgeräten (2, 4, 6), zu denen und/oder von denen zusätzlich zu Sprach- oder Nutzdaten Funktionsdaten übertragen werden, anhand derer Sonderfunktionen der Telefonanlage (1) ausgeführt werden, **dadurch gekennzeichnet, dass**
einer zum Auslösen von Sonderfunktionen vorgesehenen Aktionstaste eines ersten Telefonie-Endgerätes (2, 4, 6) die jeweils auszulösende Sonderfunktion abhängig von seinem Status und vom Status einer ihm zugewiesenen Benutzergruppe mit einer Mehrzahl von Telefonie-Endgeräten (2, 4, 6) zugewiesen wird.

2. Verfahren nach Anspruch 1, bei dem im Falle eines freien ersten und zweiten Telefonie-Endgeretes (2, 4, 6) durch die Aktionstaste eine Anrufverbindung zwischen den beiden Telefonie-Endgeräten (2, 4, 6) veranlasst wird.

3. Verfahren nach Anspruch 1 oder 2, bei dem im Falle eines eintreffenden Anrufes auf dem zweiten Telefonie-Endgerät (2, 4, 6) durch die Aktionstaste eine Anrufannahme durch das erste Telefonie-Endgerät (2, 4, 6) ausgelöst wird.

4. Verfahren nach einem der Ansprüche 1 bis 3, bei dem im Falle mehrerer, zeitgleich auf dem zweiten Telefonie-Endgerät (2, 4, 6) eintreffender Anrufe durch die Aktionstaste und einer zugeordneten Auswahleinheit eine Annahme eines der eintreffenden Anrufe durch das erste Telefonie-Endgerät (2, 4, 6) ausgelöst wird.

5. Verfahren nach einem der Ansprüche 1 bis 4, bei dem im Falle eines aktiven Telefongesprächs zwischen einem dritten Endgerät (2, 4, 6) und dem zweiten Endgerät (2, 4, 6) durch die Aktionstaste das erste Endgerät (2, 4, 6) dem Telefongespräch zugeschaltet wird.

6. Verfahren nach einem der Ansprüche 1 bis 5, bei dem ein eintreffender, zuvor vom ersten Telefonie-Endgerät (2, 4, 6) auf das zweite Endgerät (2, 4, 6) weitergeleiteter Anruf durch die Aktionstaste auf das erste Endgerät (2, 4, 6) zurück geholt wird.

7. Verfahren nach einem der Ansprüche 1 bis 6, bei dem das zweite Telefonie-Endgerät (2, 4, 6) dem ersten Telefonie-Endgerät (2, 4, 6) durch Selektion aus einer Liste zugewiesen wird.

8. Verfahren nach Anspruch 7, bei dem die Zuweisung des aus der Liste ausgewählten zweiten Telefonie-Endgerätes (2, 4, 6) zu dem ersten Telefonie-Endgerät (2, 4, 6) durch die Aktionstaste erfolgt.

9. Verfahren nach Anspruch 7 oder 8, bei dem die Liste der zur Zuweisung zur Verfügung stehenden Telefonie-Endgeräte (2, 4, 6) mittels Drücken der Aktionstaste aktiviert wird.

10. Telefonie-Endgerät (2, 4, 6) mit einer Aktionstaste zur Ausführung von Sonderfunktionen, wobei die Aktionstaste zur Ausführung des Verfahrens nach einem der Ansprüche 1 bis 9 ausgestaltet ist.

11. Telefonie-Endgerät (2, 4, 6) nach Anspruch 10 mit einem integrierten Speicher, in dem ausgewählte Speicherbereiche für die Hinterlegung von Zuordnungsinformationen zu weiteren Telefonie-Endgeräten bereitgestellt sind.

## Claims

1. Method for operating a telephone system (1) comprising a plurality of telephony terminals (2, 4, 6) to which and/or from which functional data can be transmitted, in addition to voice data or payload, by means of special functions of the telephone system (1), **characterised in that**
an action key of a first telephony terminal (2, 4, 6) provided for triggering special functions is allocated the special function to be triggered in each case, depending on the status of said terminal and on the status of a user group allocated thereto having a plurality of telephony terminals (2, 4, 6).

2. Method according to claim 1, wherein in the case of a free first and second telephony terminal (2, 4, 6), a call connection between the two telephony terminals (2, 4, 6) is initiated by the action key.

3. Method according to either claim 1 or claim 2, wherein in the case of an incoming call on the second telephony terminal (2, 4, 6), taking of the call by the first telephony terminal (2, 4, 6) is triggered by the action key.

4. Method according to any of claims 1 to 3, wherein in the case of several calls coming in simultaneously on the second telephony terminal (2, 4, 6), taking of one of the incoming calls by the first telephony terminal (2, 4, 6) is triggered by the action key and an assigned selection unit.

5. Method according to any of claims 1 to 4, wherein in the case of an active telephone conversation between a third terminal (2, 4, 6) and the second terminal (2, 4, 6), the first terminal (2, 4, 6) is connected to the telephone conversation by the action key.

6. Method according to any of claims 1 to 5, wherein an incoming call that had been forwarded previously by the first telephony terminal (2, 4, 6) to the second terminal (2, 4, 6) is brought back the first terminal (2, 4, 6) by means of the action key.

7. Method according to any of claims 1 to 6, wherein the second telephony terminal (2, 4, 6) is allocated to the first telephony terminal (2, 4, 6) by selection from a list.

8. Method according to claim 7, wherein the second telephony terminal (2, 4, 6) selected from the list is allocated to the first telephony terminal (2, 4, 6) by the action key.

9. Method according to either claim 7 or claim 8, wherein the list of the telephony terminals (2, 4, 6) available for allocation is activated by pressing the action key.

10. Telephony terminal (2, 4, 6) comprising an action key for carrying out special functions, wherein the action key is designed for carrying out the method according to any of claims 1 to 9.

11. Telephony terminal (2, 4, 6) according to claim 10, comprising an integrated memory in which selected storage areas for storing assignment information regarding other telephony terminals is stored.

## Revendications

1. Procédé de fonctionnement d'un système de téléphonie (1) avec une pluralité de terminaux de téléphonie (2, 4, 6) vers lesquels et/ou à partir desquels sont transmises, en plus de données vocales ou utiles, des données fonctionnelles à l'aide desquelles des fonctions spéciales du système de téléphonie (1) sont réalisées, **caractérisé en ce que** la fonction spéciale à déclencher respectivement est affectée à une touche d'action du premier terminal de téléphonie (2, 4, 6) prévue pour le déclenchement de fonctions spéciales en fonction du statut de ce terminal et du statut d'un groupe d'utilisateurs qui lui est affecté avec une pluralité de terminaux de téléphonie (2, 4, 6).

2. Procédé selon la revendication 1, dans lequel, dans le cas d'un premier et d'un deuxième terminal de téléphonie (2, 4, 6) libres, une connexion d'appel entre les deux terminaux de téléphonie (2, 4, 6) est provoquée par la touche d'action.

3. Procédé selon la revendication 1 ou 2, dans lequel, dans le cas d'un appel entrant sur le deuxième terminal de téléphonie (2, 4, 6), une prise d'appel par le premier terminal de téléphonie (2, 4, 6) est déclenchée par la touche d'action.

4. Procédé selon l'une des revendications 1 à 3, dans lequel, dans le cas de plusieurs appels entrant en même temps sur le deuxième terminal de téléphonie (2, 4, 6), une prise d'un des appels entrants par le premier terminal de téléphonie (2, 4, 6) est déclenchée par la touche d'action et une unité de sélection affectée.

5. Procédé selon l'une des revendications 1 à 4, dans lequel, dans le cas d'une communication téléphonique active entre un troisième terminal de téléphonie (2, 4, 6) et le deuxième terminal de téléphonie (2, 4, 6), le premier terminal de téléphonie (2, 4, 6) est branché sur la communication téléphonique par la touche d'action.

6. Procédé selon l'une des revendications 1 à 5, dans lequel un appel entrant, transmis préalablement à partir du premier terminal de téléphonie (2, 4, 6) vers le deuxième terminal de téléphonie (2, 4, 6), est récupéré vers le premier terminal de téléphonie (2, 4, 6) par la touche d'action.

7. Procédé selon l'une des revendications 1 à 6, dans lequel le deuxième terminal de téléphonie (2, 4, 6) est affecté au premier terminal de téléphonie (2, 4, 6) par une sélection à partir d'une liste.

8. Procédé selon la revendication 7, dans lequel l'affectation au premier terminal de téléphonie (2, 4, 6) du deuxième terminal de téléphonie (2, 4, 6) sélectionné dans la liste est effectuée par la touche d'action.

9. Procédé selon la revendication 7 ou 8, dans lequel la liste des terminaux de téléphonie (2, 4, 6) disponibles pour l'affectation est activée par l'enfoncement de la touche d'action.

10. Terminal de téléphonie (2, 4, 6) avec une touche d'action pour la réalisation de fonctions spéciales, dans lequel la touche d'action est configurée pour la réalisation du procédé selon l'une des revendications 1 à 9.

11. Terminal de téléphonie (2, 4, 6) selon la revendication 10, avec une mémoire intégrée dans laquelle des zones de mémoire sélectionnées sont fournies pour l'enregistrement d'informations d'affectation portant sur d'autres terminaux de téléphonie.
